# EUROPÄISCHE PATENTANMELDUNG

(11) **EP 0 806 433 A2**
(43) Veröffentlichungstag der Anmeldung: **12.11.1997**
(21) Anmeldenummer: 97107010.7
(22) Anmeldetag: 28.04.1997
(51) Int. Cl.: C08B 11/193, C08B 3/16, C08B 15/06

(54) **Kompostierbare und thermoplastisch verarbeitbare Celluloseether-2-Hydroxycarbonsäureester und Mischester**

(30) Priorität: 10.05.1996 DE 19618826
(71) Anmelder: WOLFF WALSRODE AG, D-29655 Walsrode (DE)
(72) Erfinder: Simon, Joachim, Dr., 40589 Düsseldorf (DE); Müller, Hanns Peter, Dr., 51519 Odenthal (DE); Koch, Rainhard, Dr., 51065 Köln (DE); Dijkstra, Dirk Jacques, Dr., 50935 Köln (DE); Engelhardt, Jürgen, Dr., 29683 Fallingbostel (DE); Müller, Volkhard, Dr., 29699 Bomlitz (DE)
(74) Vertreter: Braun, Rolf, Dr.

(57) **Zusammenfassung**

Die vorliegende Erfindung betrifft Thermoplastische, wasserunlösliche und vollständig kompostierbare Celluloseetherester, die sich durch die allgemeine Struktur (I) 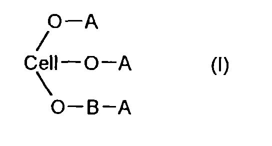 beschreiben lassen, worin Cell-O den substituierten Rest einer Hydroxylgruppe an der Cellulose-Kette repräsentiert und B eine polymere Ethergruppe der Struktur (II) ist, worin E für eine aliphatische, verzweigte oder unverzweigte Kette mit 2 bis 4 C-Atomen steht, n eine ganze Zahl von 1 bis 5 ist und für den Fall n gleich 0 mindestens eine der Gruppen A eine Methyl-, Ethyl-, Benzyl-, Carboxylalkyl-, Sulfoalkyl- oder Cyanoethyl-Gruppe ist 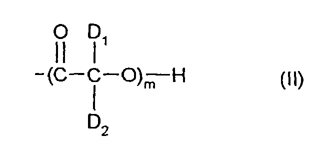 und mindestens eine der Gruppen A eine 2-Hydroxycarbonsäure der Struktur (III) ist

-(E-O)ₙ- (III)

D₁ und D₂ stehen unabhängig, voneinander für ein Wasserstoffatom oder eine Methyl- bzw. Ethyl-Gruppe, m für eine ganze Zahl von 1 bis 10.

## Beschreibung

Die Vorliegende Erfindung betrifft neue thermoplastische verarbeitbare und kompostierbare Celluloseetherester mit 2-Hydroxycarbonsäuren als Säurekomponenten sowie Mischester, die neben 2-Hydroxycarbonsäure-Gruppen weitere Mono-, Dicarbonsäure- oder Carbamat-Gruppen enthalten.

Biologisch abbaubare Werkstoffe müssen einerseits hohen technischen Anforderungen bezüglich Extrudierbarkeit, Wasserfestigkeit und Mechanik genügen. Andererseits ist die vollständige biologische Abbaubarkeit unter Kompostbedingungen innerhalb eines Rottcyclus von 3 Monaten (Kompostierbarkeit) Voraussetzung für eine Entsorgung über die Kompostierung.

Cellulose-2-Hydroxycarbonsäureester sind bereits bekannt. In der DE 33 22 118 werden Celluloseester beschrieben, die durch Umsetzung von Cellulose mit Lactid oder Glycolid in cellulosespezifisschen Lösungsmittelsystemen wie Dimethylacetamid / LiCl hergestellt werden. Nach dieser Methode gelingt lediglich die Synthese niedrig substituierter, wasserlöslicher Cellulose-Derivate, die als Beschichtungsmittel oder Konsistenzregler eingesetzt werden. Aufgrund ihrer Wasserlöslichkeit und fehlenden Thermoplastizität sind solche Celluloseester zur Herstellung von Filmen und Formteilen mit befriedigenden Gebrauchseigenschaften ungeeignet.

DE 4317231 beschreibt die Herstellung von Celluloseetherester-Mischpropfpolymerisaten aus feuchter Alkalicellulose in einer Eintopfreaktion, durch sukzessive Zugabe von Alkenoxiden und Lactonen. Hierdurch lassen sich zwar wasserunlösliche Produkte mit thermoplastischen Eigenschaften herstellen, allerdings bilden sich unter solchen Reaktionsbedingungen stets große Mengen Nebenprodukt. Im Falle solcher Nebenprodukte - hauptsächlich ein Homopolymerisat des Lactons - ist von Kompostierbarkeit auszugehen. Der Substituitonsgradsbereich in dem das Cellulose-Derivat Thermoplastizität und vollständige biologische Abbaubarkeit innerhalb des üblichen Rottecyclus von 12 Wochen im Kompost zeigt, wurde nicht beschrieben.

Die Geschwindigkeit des biologischen Abbaus konventioneller Cellulose-Derivate ist abhängig von der Höhe des Substitutionsgrades jeder Saccharideinheit [siehe J.G. Batelaan in The Handbook of Environmental Chemistry, Volume 3, Part F, Ed. O. Hutzinger, Springer-Verlag, 1992, 229-336, M.G. Wirick, Journal of Polymer Science, Part A-1, 6(1968), 1705-1718]. So sind alle technisch verfügbaren Cellulosederivate nur mit durchschnittlichen Substitutionsgraden kleiner als 1,0 biologisch hinreichend schnell abbaubar. Thermoplastizität ist dagegen bei bekannten Derivaten wie z.B. Celluloseacetat, erst mit Substitutionsgraden größer als 2,5 zu erzielen (T. Eicher, in Ullmanns Encyklopädie der technischen Chemie, 4. Auflage, 9, 1975, 227-246).

Aufgabe der vorliegenden Erfindung ist demnach die Synthese wasserunlöslicher und thermoplastisch verarbeitbarer Cellulose-Derivate, die unter Kompostbedingungen innerhalb von 3 Monaten vollständig biologisch abbauen.

Erfindungsgemäß gelingt dies durch Umsetzung von Celluloseethern mit den cyclischen Dimeren von 2-Hydroxycarbonsäuren wie z.B. mit D-, DL- und L-Lactid sowie mit Oligomeren der 2-Hydroxycarbonsäuren wie z.B. mit Milchsäureoligomeren, die 2 bis 10 Milchsäureeinheiten enthalten.

Weiterhin wird die Aufgabe durch die Synthese neuartiger gemischter Celluloseetherester gelöst, die neben 2-Hydroxycarbonsäuregruppen weitere Dicarbonsäuregruppen, Monocarbonsäuregruppen oder Carbamatgruppen enthalten.

Es wurde festgestellt, daß Celluloseether mit Substitutionsgraden kleiner als 1 in den üblichen organischen Lösungsmitteln wie z. B. Dioxan, Dimethylacetamid oder *tert*.-Butanol mit den cyclischen Dimeren von 2-Hydroxycarbonsäuren zu Celluloseetherestern mit Gesamtsubstitutionsgraden größer als 3 umgesetzt werden können. Spezifische Lösungsmittelsysteme für Cellulose wie DMAc / LiCl werden hierfür nicht benötigt.

Die erfindngsgemäßen Celluloseether-2-Hydroxycarbonsäureester sind wasserunlöslich und thermoplastisch verarbeitbar, wenn der molekulare Substitutionsgrad mit 2-Hydroxycarbonsäure pro Anhydroglucose-Wiederholungseinheit größer als 3 ist. Überraschenderweise bauen diese Celluloseetherester trotz ihres hohen Gesamtsubstitutionsgrades innerhalb von 3 Monaten unter Kompostbedingungen vollständig biologisch ab. Insbesondere Hydroxypropylcellulose-Lactate zeigen zudem gute optische und mechanische Eigenschaften und ähneln in dieser Hinsicht konventionellem Polystyrol. Durch Mischsubstitution mit weiteren Monocarbonsäure-, Dicarbonsäure- und Carbamatgruppen lassen sich thermoplastische Verarbeitbarkeit, mechanische Eigenschaften und Wasserempfindlichkeit der Celluloseetherester in einem weiten Bereich variieren. Wenn die Summe der Substitutionsgrade des Ether und des Mischsubstituenten 2 nicht übersteigt, sind auch die gemischten Ester vollständig kompostierbar.

Es gelingt somit erstmals hoch substituierte, thermoplastisch verarbeitbare und vollständig kompostierbare Cellulose-Derivate herzustellen, deren Werkstoffeigenschaften mit den Eigenschaften von Standardkunststoffen vergleichbar sind.

Die Erfindungsgemäß herzustellenden Celluloseetherester lassen sich durch die allgemeine Struktur (I) 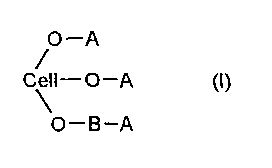 beschreiben, wobei Cell-O den substituierten Rest einer Hydroxylgruppe an der Cellulose-Kette repräsentiert und mindestens eine der Gruppen A eine 2-Hydroxycarbonsäure der Struktur (II) ist.

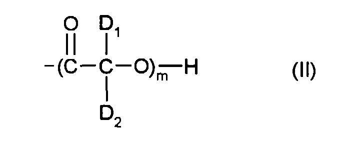

D₁ und D₂ stehen unabhängig voneinander für ein Wasserstoffatom oder eine Methyl-, bzw. Ethal-Gruppe, m für eine ganze Zahl von 1 bis 10.

B ist eine polymere Ethergruppe der allgemeinen Struktur (III)

-(E-O)ₙ- (III),

worin E für eine aliphatische, verzweigte oder unverzweigte Kette mit 2 bis 4 C-Atomen steht und n eine ganze Zahl von 1 bis 5 ist. Für den Fall, daß n gleich 0 ist, muß mindestens eine der Gruppen A eine Methyl-, Ethyl-, Benzyl-, Carboxylalkyl, Sulfoalkyl-oder Cyanoethyl-Gruppe sein.

Liegen gemischte Ester vor, dann ist mindestens eine der Gruppen A ein 2-Hydroxycarbonsäure der Struktur (II) und mindestens eine weitere Gruppe A eine Monocarbonsäure-, eine Dicarbonsäure- oder eine Carbamat-Gruppe. Die Summe der Substitutionsgrade der Gruppen B und A ist kleiner als 2 für alle Substituenten, die keine 2-Hydroxycarbonsäure-Gruppen sind. Der Rest der Gruppen A sind Hydroxylgruppen.

Zur Synthese dieser Celluloseetherester wird der Cellether in einem organischem Lösungsmittel suspendiert und mit einem Katalysator versetzt. Anschließend gibt man das cyclische Dimere der 2-Hydroxycarbonsäure zu und rührt für 1 bis 10 Stunden, bevorzugt für 2 bis 5 Stunden bei Reaktionstemperaturen zwischen 50 und 150°C, bevorzugt zwischen 80 und 130°C. Die Mischsubstitution erfolgt auf gleichem Wege, mit dem Unterschied, daß neben dem cyclischen Dimeren der 2-Hydroxycarbonsäure zusätzlich ein Monocarbonsäureanhydrid, Dicarbonsäureanhydrid oder Isocyanat zur Reaktion gebracht wird.

Geeignete Celluloseether sind beispielsweise Alkyl- und Arylcellulosen wie z.B. Methylcellulose, Ethylcellulose, Benzylcellulose, Cyanoethylcellulose, Hydroxybutylcellulose, Hydroxyethylcellulose, Hydroxypropylcellulose und deren Mischether sowie ionische Cellether wie Carboxyalkylcellulose oder Sulfoalkylcellulose. Die Substitutionsgrade sind kleiner / gleich 1.5, bevorzugt kleiner 1.

Als cyclische Dimere von 2-Hydroxycarbonsäuren eignen sich besonders Glycolid, Lactid und die cyclischen Dimeren von 2-Hydroxy-n-buttersäure und 2-Hydroxyisobuttersäure.

Zur Mischsubstitution geeignete Dicarbonsäureanhydride sind Alkan- / oder Alkenbernsteinsäureanhydride, Phthalsäureanhydrid, Tetrahydrophthalsäureanhydrid, Bernsteinsäureanydrid sowie Maleinsäureanhydrid und seine Additionsprodukte an Fettsäuren.

Zur Mischsubstitution geeignete Monocarbonsäureanhydride sind Essigsäure-, Propionsäure- und Buttersäureanhydrid.

Zur Mischsubstitution weiterhin geeignet sind aliphatische Isocyanate z.B. Butylisocyanat und Stearylisocyanat.

Als Suspensions- bzw. Lösungsmittel eignenen sich Ketone, Ether und cyclische Ether, Acetale, Kohlenwasserstoffe und polare aprotische Verbindungen wie Dimethylsulfoxid, Dimethylformamid, Dimethylacetamid, Dioxan, Tetrahydrofuran, N-Methylmorpholin, N-Methylmorpholinoxid, N-Methylpyrolidon, Dimethoxymethan, Dimethylether, Diethylenglycoldimethylether des weiteren protische Lösungsmittel wie z. B. tert.-Butanol.

Die Reaktion kann basisch, koordinativ oder sauer katalysiert durchgeführt werden.

Als Katalysatoren können Amine wie Triethylamin und 1,8-Diazabicyclo[5.4.0]undec-7-en oder basische Metallsalze wie Natriumacetat, Natriumcarbonat, Kaliumacetat, Kaliumcarbonat und Lithiumcarbonat eingesetzt werden. Zudem eignen sich Zinn- und Zinksalze wie sie üblicherweise zur Synthese von Polylactid eingesetzt werden. Im Falle einer sauren Katalyse eignen sich starke Mineralsäuren wie z. B. konzentrierte Schwefelsäure, Toluolsulfonsäure oder Perchlorsäure.

Durch Variation des zugrundeliegenden Cellethers und die Kombination der Ester-Gruppen sowie durch Wahl geeigneter Substitutionsgrade kann man so thermoplastische und innerhalb von 3 Monaten unter Kompostbedingungen vollständig biologisch abbaubare Celluloseetherester mit Schmelzpunkten zwischen 100 und 190°C erhalten, die mit den herkömmlichen Verarbeitungstechniken für Thermoplaste wie Extrusion, Spritzgießen oder Blasformen verarbeitbar sind.

Cellether-2-Hydroxycarbonsäureester zeichnen sich durch Steifigkeit und Festigkeit sowie durch Transparenz und Glanz aus. Bezüglich ihrer Werkstoffeigenschaften ähneln sie konventionellem, nicht kompostierbarem Polystyrol.

Sie eignen sich zur Herstellung von biologisch abbaubaren Folien, Fasern, Töpfen Flaschen und anderen Formkörpern und können in ihren Eigenschaften durch die Herstellung von Blends beliebiger Zusammensetzung mit anderen biologisch abbaubaren Komponenten wie z. B. Stärke, Cellulose, Polylactid, Glycolid, Polyhydroxybuttersäure Polyhydroxyvaleriansäure, Polycaprolacton, Polyesteramiden, Copolyestern oder Polyesterurethanen variiert werden. Die Modifizierung mit Hilfsmitteln wie z. B. Weichmachern, Antioxidantien, Witterungsstabilisatoren, Flammschutzmitteln, Farbstoffen oder Pigmenten ist möglich. Weiterhin gelingt die Herstellung von kompostierbaren anisotropen Faserverbundwerkstoffen durch Einbringen von natürlichen Fasern wie Flachs, Ramie oder Hanf.

Die beschriebenen Polysaccharidderivate sind in organischen Lösungsmitteln wie z. B. DMSO, DMAc, Dioxan, THF oder Aceton löslich.

Die neuen erfindungsgemäßen Celluloseetherester eignen sich zur Herstellung von Formteilen wie z.B . Flaschen, Blumentöpfen, Einmalbesteck und -geschirr, Golftees, Folien zur Verpackung für z.B. Lebensmitteln und Bioabfällen, Mulchfolien, Babywindeln usw.. Weiterhin sind sie geeignet zur Beschichtung von Flächengebilden wie z. B. Papier, Fließen, Geweben, Gewirken oder anderen Substraten oder auch zur Herstellung von Fasern Blends und Laminaten sowie Faserverbundwerkstoffen. Entsprechende Materialien sind auch z. B. dem Papierrecycling zugänglich.

Die erfindungsgemaß beanspruchte Eigenschaft der vollständigen Kompostierbarkeit wird dabei wie folgt untersucht:

Die zu testenden Verbindungen werden als Folien in 6 x 6 Diarahmen eingespannt und bei 80°C bis zur Gewichtskonstanz getrocknet. Anschließend werden sie in einem geeigneten Kasten in eine 2 cm hohe Mischung aus geschreddertem Blumenschnitt (1 Teil w/w) und durchgerottetem Gartenkompost (2 Teile, w/w) eingelegt. Zur Einstellung einer hohen Luftfeuchtigkeit werden wassergefüllte Kristallisierschalen auf das Kompostgemisch gestellt. Die gefüllten Kästen werden in einem Brutschrank für jeweils 4 Wochen nacheinander bei 60°C, 50°C und 37°C inkubiert. Wasserverluste werden über den Gewichtsverlust bestimmt und ausgeglichen. Während der Inkubation wird regelmäßig der pH-Wert des Komposts gemessen. Wenn der gemessene pH-Wert um mehr als eine Einheit von pH 7 abweicht, wird der Wasserverlust durch 100 mM Kalium-Phosthat pH 7,0 ausgeglichen. Nach jeweils 4 Wochen wird ein Ansatz abgebrochen, die Folien entnommen, gereinigt und bei 80°C bis zur Gewichtskonstanz getrocknet. Unmittelbar nach dem Trocknen wird der Gewichtsverlust der Folie durch erneutes Wiegen bestimmt.

In der vergifteten Kontrolle wird der Ansatz komplett bei 105°C getrocknet und das dabei verdampfte Wasser dann durch eine 0.1 %ige HgCl₂-Lösung ersetzt. Die Proben für die vergiftete Kontrolle werden vor dem Einbringen in das Kompostgemisch in die HgCl₂-Lösung eingelegt und dann getrocknet. Der Kontrollansatz wird genauso inkubiert wie die zu testenden Ansätze. Eine Substanz wird dann als abbaubar eingestuft, wenn nach 12 Wochen im unvergifteten Ansatz keine Probensubstanz mehr nachzuweisen ist, die Probe im vergifteten Ansatz jedoch unverändert ist.

Die Substitutionsgrade lassen sich mit den üblichen Methoden der Cellulosederivatanalytik wie z. B. Zeiselspaltung, Elementaranalyse, Gaschromatographie und ¹³C-NMR-Spektroskopie bestimmen. Erweichungspunkte wurden auf einer beheizten Koflerbank bestimmt.

Der Gegenstand der vorliegenden Erfindung soll anhand der vorliegenden Beispiele noch näher erläutert werden.

### Beispiel 1

Eine Hydroxypropylcellulose (75 g / 0,36 mol) mit einem molaren Substitutionsgrad (MS) 0,88 wird in 675 g *tert*.-Butanol suspendiert, mit 5 g 1,8-Diazabicyclo[5.4.0]undec-7-en (DBU) versetzt und auf 80°C geheizt. Nach Zugabe von 154 g (1.07 mol) L-Lactid erhöht man die Temperatur auf 140°C, rührt 5 h und bringt die resultierende pastöse Masse in Wasser ein. Das ausfallende Produkt wird isoliert, gewaschen und getrocknet. Man erhält 140 g mit einem Erweichungspunkt von 160°C und einem MS-Lactat von 4.01.

### Beispiel 2

Eine Hydroxypropylcellulose (75 g / 0,42 mol) mit MS-Hydroxypropyl'0,88 wird in 675 g Dimethylacetamid suspendiert, mit 2 g DBU versetzt und 2 h auf 80°C geheizt. Nach der Zugabe von 202 g (1.40 mol) L-Lactid wird die Temperatur für 5 h auf 130°C angehoben. Man kühlt ab, fällt aus Wasser, isoliert und trocknet das Produkt: 195 g, Erweichungsbereich 120-200°C, MS-Lactat'6.04, MFR 14.6 g / 10 min (220°C / 5 kg).

Eine Gießfolie zeigt folgende mechanische Eigenschaften:

| | |
|---|---|
| E-Modul | 2899 MPa |
| Reißdehnung | 0.9 % |
| Reißfestigkeit | 20.4 MPa |

Die Folie zerfällt nach einem Monat im Folienkompostier-Test

### Beispiel 3

75 g (0,35 mol) einer Hydroxypropylcellulose mit MS 0,88 wird in 675 g DMAc suspendiert, mit 1 ml conc. Schwefelsäure sowie 126 g (0.87 mol) L-Lactid versetzt und auf 130°C erwärmt. Man rührt 5 h bei 50°C, fällt aus Wasser und trocknet: 131 g, Erwp. 165°C, MS-Lactat'3.23.

Eine Gießfolie zeigt folgende mechanische Eigenschaften:

| | |
|---|---|
| E-Modul | 2575 MPa |
| Reißdehnung | 3.5 % |
| Reißfestigkeit | 47.1 MPa |

Die Folie zerfällt nach einem Monat im Folienkompostier-Test

### Beispiel 4

8,1 kg Zellstoff werden in 8,1 kg Isopropylalkohol und 0,8 kg Wasser suspendiert und mit 6 kg 50%iger Natronlauge besprüht. Man heizt auf 80°C und düst 5,8 kg Propylenoxid auf. Nach einer Reaktionszeit von 2h wird gekühlt, mit Essigsäure neutralisiert und mit Methanol gewaschen. Man erhält eine Hydroxypropylcellulose vom MS_{Hydroxypropyl} 0,82.

3,86 kg dieser Hydroxypropylcellulose werden in 30 kg Dimethylacetamid suspendiert und mit 8,2 kg L-Lactid und 0,2 kg DBU versetzt. Das Reaktionsgemisch wird für 5 h bei 120°C gerührt, aus Wasser gefällt und getrocknet. Man erhält 10 kg Hydroxypropylcellulose-Lactat mit einem Schmelzpunkt von 170°C und einem MS_{Hydroxypropyl} 0,82 und MS_{Lactat} 3,40.

Das Material wurde mit der Sprizgußtechnik zu Prüfstäben 80x10x4 mm mit folgenden mechanischen Eigenschaften verarbeitet:

| | |
|---|---|
| E-Modul: | 3,5 GPa |
| Biegefestigkeit: | 93 MPa |
| Dehnung: | 4 % |

Die Prüfstäbe sind nach 2 Monaten im Kompostier-Test zerfallen.

### Beispiel 5

75 g (0,35 mol) einer Hydroxypropylcellulose mit MS 0,88 wird in 675 g DMAc suspendiert, mit 2 g DBU, 76 g (0.53 mol) L-Lactid sowie 18 g (0.18 mol) Acetanhydrid versetzt und auf 130°C erwärmt. Man rührt 5 h bei 130°C, fällt aus Wasser und trocknet: 121 g, Erwp. 200°C, MS-Lactat + DS-Acetat'1.81.

Eine Gießfolie zeigte folgende mechanische Eigenschaften:

| | |
|---|---|
| E-Modul | 3355 MPa |
| Reißdehnung | 2.3 % |
| Reißfestigkeit | 57 MPa |

Die Folie zerfällt nach einem Monat im Folienkompostier-Test

### Beispiel 6

75 g (0,35 mol) einer Hydroxypropylcellulose mit MS 0,88 wird in 675 g DMAc suspendiert, mit 2 g DBU, 99 g (0.49 mol) L-Lactid sowie 3.5 g (0.013 mol) 2-Dodecenylbernsteinsäureanhydrid versetzt und auf 130°C erwärmt. Man rührt 5 h bei 130°C, fällt aus Wasser und trocknet: 121 g, Erwp. 200°C, MS-Lactat'<2.6.

Eine Gießfolie zeigte folgende mechanische Eigenschaften:

| | |
|---|---|
| E-Modul | 2833 MPa |
| Reißdehnung | 2.9 % |
| Reißfestigkeit | 58 MPa |

Die Folie zerfällt nach einem Monat im Folienkompostier-Test

### Beispiel 7

75 g (0,35 mol) einer Hydroxypropylcellulose mit MS 0,88 wird in 675 g DMAc suspendiert, mit 2 g DBU, 76 g (0.53 mol) L-Lactid sowie 45 g (0.35 mol) Propionsäureanhydrid versetzt und auf 130°C erwärmt. Man rührt 5 h bei 130°C, fällt aus Wasser und trocknet; 121 g, Erwp. 155°C.

Eine Gießfolie zeigte folgende mechanischen Eigenschaften:

| | |
|---|---|
| E-Modul | 2913 MPa |
| Reißdehnung | 2.7 % |
| Reißfestigkeit | 54 MPa |

Die Folie zerfällt nach einem Monat im Folienkompostier-Test

### Beispiel 8

75 g (0,35 mol) einer Hydroxypropylcellulose mit MS 0,88 wird in 675 g DMAc suspendiert, mit 2 g DBU, 76 g (0.53 mol) L-Lactid sowie 52 g (0.35 mol) Phthalsäureanhydrid versetzt und auf 130°C erwärmt. Man rührt 5 h bei 130°C, fällt aus Wasser und trocknet; 112 g, Erwp. 195°C.

## Patentansprüche

1. Thermoplastische, wasserunlösliche und vollständig kompostierbare Celluloseetherester, die sich durch die allgemeine Struktur (I) 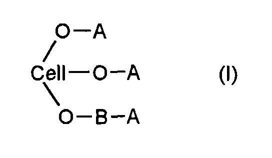 beschreiben lassen, worin Cell-O den substituierten Rest einer Hydroxylgruppe an der Cellulose-Kette repräsentiert und B eine polymere Ethergruppe der Struktur (II) ist, worin E für eine aliphatische, verzweigte oder unverzweigte Kette mit 2 bis 4 C-Atomen steht, n eine ganze Zahl von 1 bis 5 ist und für den Fall n gleich 0 mindestens eine der Gruppen A eine Methyl-, Ethyl-, Benzyl-, Carboxylalkyl-, Sulfoalkyl- oder Cyanoethyl-Gruppe ist 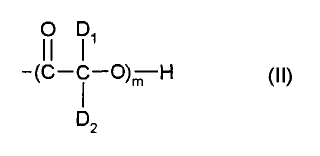 und mindestens eine der Gruppen A eine 2-Hydroxycarbonsäure der Struktur (III) ist
-(E-O)ₙ- (III)
D₁ und D₂ stehen unabhängig voneinander für ein Wasserstoffatom oder eine Methyl- bzw. Ethyl-Gruppe, m für eine ganze Zahl von 1 bis 10.

2. Thermoplastische, wasserunlösliche und biologisch abbaubare Celluloseetherester gemäß Anspruch 1, dadurch gekennzeichnet, daß die polymere Ethergruppe B Hydroxyethyl- oder Hydroxypropyl- mit einem molekularen Substitutionsgrad pro Anhydroglucose-Wiederholungseinheit kleiner als 1.5, insbesondere kleiner als 1 ist und daß die 2-Hydroxycarbonsäure-Gruppe der allgemeinen Struktur (II) eine mono- oder oligomere Milchsäure-Gruppe ist, mit einem molekularen Substitutionsgrad pro Anhydroglucose-Wiederholungseinheit > 3.

3. Thermolastische und biologisch abbaubare Celluloseetherester der allgemeinen Struktur (I) worin B eine polymere Ethergruppe der Struktur (III) ist, und E für eine aliphatische, verzweigte oder unverzweigte Kette mit 2 bis 4 C-Atomen steht, n eine ganze Zahl von 1 bis 5 ist und für den Fall n gleich 0 mindestens eine der Gruppen A eine Methyl-, Ethyl-, Benzyl-, Carboxylalkyl-, Sulfoalkyl- oder Cyanoethyl-Gruppe ist.
Und mindestens eine der Gruppen A eine 2-Hydroxycarbonsäure der Struktur (II) ist, worin D₁ und D₂ für ein Wasserstoffatom oder eine Methyl- bzw. Ethyl-Gruppe steht und m eine ganze Zahl von 1 bis 10 ist.
Und mindestens eine weitere der Gruppen A eine Monocarbonsäure- oder eine Dicarbonsäure- oder Carbamat-Gruppe ist, wobei die Summe der Substitutionsgrade der Gruppen B und A kleiner als 2 ist, für alle Substituenten, die keine 2-Hydroxycarbonsäure-Gruppen sind.

4. Thermoplastische, wasserunlösliche und kompostierbare Celluloseetherester gemäß Anspruch 3, dadurch gekennzeichnet, daß die polymere Ethergruppe B Hydroxyethyl- oder Hydroxypropyl- mit einem molekularen Substitutionsgrad pro Anhydroglucose-Wiederholungseinheit kleiner als 1.5, insbesondere kleiner als 1 ist, daß die 2-Hydroxycarbonsäure-Gruppe der allgemeinen Struktur (II) eine monomere- oder oligomere Milchsäure-Gruppe ist und daß die Monocarbonsäure-Gruppe eine Essigsäure-, Propionsäure- oder Buttersäure-Gruppe, die Dicarbonsäure-Gruppe eine Phthalsäure-, Maleinsäure- oder Alkenylbernsteinsäure-Gruppe und die Carbamat-Gruppe eine Butyl- oder Stearylcarbamat-Gruppe ist.

5. Verfahren zur Herstellung thermoplastischer, wasserunlöslicher und kompostierbarer Celluloseetherester gemäß Anspruch 1, dadurch gekennzeichnet, daß ein Celluloseether in einem organischen Lösungsmittel in Gegenwart eines basischen oder sauren Katalysators mit dem Dimeren einer 2-Hydroxycarbonsäure wie z.B mit D-, DL- oder L-Lactid sowie mit Oligomeren der 2-Hydroxycarbonsäuren wie z.B. mit Milchsäureoligomeren, die 2 bis 10 Milchsäureeinheiten enthalten zur Reaktion gebracht wird, und daß die Isolierung des Celluloseetheresters durch Verdampfen des Lösungsmittels oder durch Fällung erfolgt.

6. Verfahren zur Herstellung thermoplastischer, wasserunlöslicher und kompostierbarer Celluloseetherester gemäß Anspruch 3, dadurch gekennzeichnet, daß ein Celluloseether in einem organischen Lösungsmittel in Gegenwart eines basischen oder sauren Katalysators mit dem Dimeren einer 2-Hydroxycarbonsäure und mit einem Monocarbonsäure- oder Dicarbonsäureanhydrid oder einem Isocyanat zur Reaktion gebracht wird, und daß die Isolierung des Celluloseetheresters durch Verdampfen des Lösungsmittels oder durch Fällung erfolgt.

7. Formteile, Folien, Fasern, Beschichtungen, Blends und Laminate, dadurch gekennzeichnet, das sie mindestens zu 10 % aus den Cellulosetherestern gemäß den Ansprüchen 1 bis 6 bestehen.

8. Verwendung als Matrixmaterial für Formulierungen für die verzögerte Freisetzung von Wirkstoffen (z. B. Pheromone, Dünger, Fungizide, Insektizide, Herbizide oder Nematoside) unter Abbaubedingungen.

9. Verwendung für die Beschichtung von Papier nach dem Extruder-, Dispersions- oder Lackierverfahren.

10. Mischungen bestehend aus dem erfindungsgemäßen Celluloseetherester und Polylactid/Glycolid, Polycaprolacton oder Polyesteramid.
